# EUROPÄISCHE PATENTSCHRIFT

(11) **EP 2 697 976 B1**
(45) Veröffentlichungstag und Bekanntmachung des Hinweises auf die Patenterteilung: **29.06.2016**
(21) Anmeldenummer: 12724071.1
(22) Anmeldetag: 08.04.2012
(51) Int. Cl.: H04N 13/02, G01C 25/00, H04N 17/00, G03B 35/08

(54) **VORRICHTUNG ZUM KALIBRIEREN EINER MEHRKAMERA-AUFNAHMEVORRICHTUNG FÜR DREIDIMENSIONALE BILDAUFNAHME**
ARRANGEMENT FOR CALIBRATING A MULTI-CAMERA DEVICE FOR CAPTURING THREE-DIMENSIONAL IMAGES
DISPOSITIF D'ÉTALONNAGE D'UN DISPOSITIF D'ACQUISITION D'IMAGES À PLUSIEURES CAMÉRAS POUR CAPTURER DES IMAGES TRIDIMENSIONELLES

(30) Priorität: 09.04.2011 DE 202011005083 U
(43) Veröffentlichungstag der Anmeldung: 19.02.2014
(73) Patentinhaber: Maier, Florian, 82205 Gilching (DE)
(72) Erfinder: Maier, Florian, 82205 Gilching (DE)
(86) Internationale Anmeldenummer: PCT/DE2012/000382
(87) Internationale Veröffentlichungsnummer: WO 2012/139552

(56) Entgegenhaltungen:
- EP-A1- 2 053 868
- JP-A- 2006 250 889
- US-A1- 2011 299 761
- "Calibration Procedures for 3D Rigs", , 15. April 2010 (2010-04-15), XP55033203, Santa Monica, CA, USA Gefunden im Internet: URL:http://prestoncinema.com/Manuals/3DRig Calibration.pdf [gefunden am 2012-07-18]
- YASUHIRO KATAYAMA: "Camera Calibration with a Transparent Calibration Tool Using Color Filters: Application to Stereo Camera Calibration for a Distant Object", 18TH INTERNATIONAL CONFERENCE ON PATTERN RECOGNITION (ICPR'06), Bd. 1, 24. August 2006 (2006-08-24), Seiten 607-612, XP55033362, DOI: http://doi.ieeecomputersociety.org/10.1109 /ICPR.2006.349 ISBN: 978-0-76-952521-1
- FABIO REMONDINO ET AL: "DIGITAL CAMERA CALIBRATION METHODS: CONSIDERATIONS AND COMPARISONS", ISPRS COMMISSION V SYMPOSIUM 'IMAGE ENGINEERING AND VISION METROLOGY, 27. September 2006 (2006-09-27), Seiten 266-272, XP55033196,

## Beschreibung

Die Erfindung betrifft eine Vorrichtung zum Kalibrieren einer Mehrkamera-Aufnahmevorrichtung für dreidimensionale Bildaufnahme, bei der die Kalibrierung in zwei Tiefenebenen erfolgt.

### Stand der Technik:

Zur Aufnahme von plastisch (= dreidimensional) wirkenden Bildern, die mit mehrkanaligen Bilddarstellungstechniken gezeigt werden, sind mindestens zwei Ansichten von einem aufzunehmenden Objekt notwendig, wobei die Einzelbilder zu einem einzigen dreidimensional wirkenden Bild zusammengefügt werden (z. B. nach Falk, D.; Brill, D.; Stork, D.; Ein Blick ins Licht: Einblicke in die Natur des Lichts und des Sehens,in Farbe und Fotografie; Birkhäuser Verlag, Basel-Boston und Springer Verlag, Berlin-Heidelberg; 1990; Seite 230 ff). Diese Bilder können mit bekannten Bildtrennverfahren zur plastischen Bilddarstellung gezeigt werden. Alle diese Verfahren benötigen mindestens zwei perspektivisch unterschiedliche Ansichten von einem Objekt. Diese Ansichten werden üblicherweise durch mindestens zwei Kameras generiert, die in unterschiedlicher, benachbarter Perspektive aufgestellt sind (vgl. Sand R.; Dreidimensionales Fernsehen; in DE-Z: Fernseh- und Kino-Technik, 37, Nr. 8/1983; Seite 321 ff). Diese Kameras blicken entweder nebeneinander in die gleiche Richtung, jedoch mit leicht unterschiedlicher Perspektive (Parallaxe), oder sind auf zwei Kameraebenen platziert, die durch einen halbdurchlässigen Spiegel zu einer Ebene zusammengeführt werden (siehe beispielhafte Ausführung in WO 2011 / 029 426). Weiterhin ist es auch möglich, mindestens zwei Kameras auf mindestens zwei Ebenen anzuordnen (siehe beispielhafte Ausführung in DE 10 2005 042 413). Die resultierenden Kamerablickwinkel blicken dabei ebenfalls in die gleiche Richtung und die Aufnahmen werden aus leicht unterschiedlichen Perspektiven getätigt. Da sich je nach Montage der Kameras / Objektive und je nach Brennweite die Lage der optischen Achsen der verwendeten Objektive zueinander ändert, sollten zur Vermeidung von Offsets oder Parallaxen oder anderweitig fehlkalibrierten Bildern die Kennlinie der Objektive durch ein Kalibrieren eingemessen oder nach jedem Brennweitenwechsel die Kameralage(n) nachjustiert werden.

Auch muss sichergestellt werden, dass die Zuordnung von linken und rechtem Kamerabild zu den jeweiligen Augen korrekt getätigt wird.

Die Druckschrift JP 2006 250 889 A offenbart eine Kalibriermethode für ein dreidimensionales Messsystem, bei der zwei beabstandete transparente Scheiben mit unterschiedlicher Gitterstruktur zur Erzeugung von definierten Referenzpunkten für zwei Kameras verwendet werden.

Auch in der Veröffentlichung Yasuhiro Katayama "Camera Calibration with a Transparent Calibration Tool Using Color Filters: Application to Stereo Camera Calibration for a Distant Object" in 18th International Conference on Pattern Recognition Bd. 1, 24.08.2006, S. 607-612 sind zum Kalibrieren zweier Kameras zwei transparente Kalibrierscheiben beschrieben, die beabstandet vor den Kameras dauerhaft angeordnet sind und gleichzeitig in unterschiedlichen Farbspektren arbeiten.

In der EP 2 053 868 A1 wird ein ortsauflösender optoelektronischer Sensor mit Testeinheit offenbart, die eine störungsfreie Raumüberwachung sicherstellen soll.

In Fabio Remondino at al: "Digital Camera Calibration Methods: Considerations and Comparisons" ISPRS Commission v Symposium "Image Engeneering and Vision Metrology" vom 27.09.2006, S. 266-272 wird eine Kamerakalibrierung für photogrammetrische Triangulation mit u.a. einem Kalibriertestfeld vorgestellt.

Die US 2011/0299761 A1 offenbart einen Apparat zur Bildverarbeitung und stellt ein Verfahren dazu vor.

Für 3D-Rigs ist eine Kalibriermethode aus der Veröffentlichung "Calibration Procedures for 3D Rigs" vom 15.04.15 von Preston Cinema, Santa Monica bekannt.

### Problem und Aufgabe:

Derzeit werden die für eine dreidimensionale Aufnahme verwendeten Kameras in der Regel nur mit einer zweidimensional aufgebauten, rechteckigen Kalibrierungstafel einjustiert. Dies macht die Kalibrierung sehr umständlich und ungenau, da eine in einer bestimmten Entfernung aufgestellte Kalibrierungstafel nur Rückschlüsse auf genau diese Entfernung zulässt, nicht jedoch auf eine generelle korrekte Ausrichtung oder Kalibrierung in allen Tiefenebenen / Entfernungen.

Zusätzlich kann es durch ein fehlerhaftes Zuordnen von rechtem und linkem Kamerabild-Kanal zu den jeweiligen Augen zu einer sogenannten pseudoskopischen Raumumstülpung kommen. Dabei sind die Tiefeninformationen invertiert, so dass ein nahes Objekt in der Ferne gesehen wird, ein fernes Objekt in der Nähe. Dies erzeugt einen wirren Eindruck beim Betrachten und sollte insbesondere in Umgebungen, wo es schnell zu einer falschen Verschaltung kommen kann (z.B. in der Live-Broadcastübertragung) unbedingt vermieden werden.

### Problemlösung:

Diese Aufgaben werden erfindungsgemäß mit den Merkmalen des Patentanspruchs 1 gelöst.

Zur Lösung der genannten Aufgaben sieht die Erfindung Ausgestaltungen vor, die zumindest zwei Tiefenebenen (Ebenen in unterschiedlichen Entfernungen) bei der Kalibrierung berücksichtigen und zwar eine nähere und eine entferntere Ebene.

Zur Fernkalibrierung wird eine Kalibrierungstafel verwendet, bei der auf einer vorzugsweise zweidimensionalen Fläche Merkmale zur geometrischen Lagebestimmung vorhanden sind, die also zur Kalibrierung der geometrischen Lage der Kameras zueinander genutzt werden.

Diese können ein Kreuz, ein Punkt, eine ggf. beleuchtete Figur oder Muster, eine Leuchtdiode oder ein reflektierendes oder selbstleuchtendes oder fluoreszierendes Objekt sein, optimaler Weise in bestimmtem Kontrast zur Umgebung zur einfacheren optischen (durch den Menschen) oder elektronischen (durch Bilderkennung oder ähnliche Verfahren) Identifizierung.

Zusätzlich können Merkmale zur Kalibrierung von weiteren Eigenschaften des Kamerasystems vorhanden sein, wie Merkmale zur Kalibrierung von Farbe,

Grautönen, Belichtung, Auflösung, Stereobasis (Abstand der Kameras zueinander), Konvergenz (Einschwenkwinkel der Kameras zueinander), Schärfe, Geometrie der Objektive, Schachbrett-Muster oder ähnliches.

Ein Kalibrierungselement kann ein oder mehrere Merkmale, mit Hilfe derer zwei Kameras zueinander ausgerichtet werden können, beinhalten.

Der Hintergrund enthält zur Fern-Kalibrierung alternativ zu einer Kalibrierungstafel natürliche oder künstliche Kalibrierungselemente - darunter sind markante Objekte oder Strukturen zu verstehen, die in beiden Kamerabildern eindeutig wiedererkannt werden können und dadurch Rückschlüsse auf die Ausrichtung der optischen Achsen der Kameras erlauben.

Diese Kalibrierungstafel oder -vorrichtung zur Fern-Kalibrierung mit Merkmalen zur geometrischen Lagebestimmung kann beispielsweise ein gut erkennbares Kreuz sein. Ebenfalls denkbar sind von diesen räumlich getrennte zusätzliche Kalibrierungselemente, die an Stativen frei positioniert werden oder an vorhandenen Gegenständen im Aufnahmeraum anbringbar, insbesondere anklebbar und wieder ablösbar sind.

Die Vorrichtung zum Kalibrieren einer Mehrkamera-Aufnahmevorrichtung für dreidimensionale Bildaufnahme, bei der die Kalibrierung in mindestens zwei Tiefenebenen erfolgt, sieht vor, dass zur Fern-Kalibrierung mindestens ein natürliches oder künstliches Kalibrierungselement in der entfernten Tiefenebene vorhanden oder angeordnet ist und zur Nah-Kalibrierung mindestens ein Element zur geometrischen Lagebestimmung direkt an oder in der dreidimensionalen Aufnahmevorrichtung angeordnet ist.

Diese nutzt - insbesondere bei einer dreidimensionalen Aufnahmevorrichtung, die aus mindestens zwei jeweils zueinander im Wesentlichen senkrecht angeordneten Kameras und einer sogenannten Spiegelbox besteht, die die einfallenden Objektstrahlen mit Hilfe mindestens eines halbdurchlässigen Spiegels auf die mindestens zwei Kameraebenen aufteilt - ein vorübergehendes Einblenden, Projizieren oder mechanisches Einbringen von mindestens einem Merkmal zur geometrischen Lagebestimmung direkt an der dreidimensionalen Aufnahmevorrichtung, z.B. auf den halbdurchlässigen Spiegel, auf dem Boden der Spiegelbox oder auf einem im Strahlengang befindlichen Klarglas. Dies kann beispielsweise ein oder mehrere Laserpunkt(e), Linien, Figuren oder Muster, ein anderweitiges Projektionsmuster oder ein anderes sonst transparent geschaltetes optisches Element (LCD oder ähnliches, elektronisch hinzuschaltbar oder abschaltbares Element) im Strahlengang sein. Bei dieser sogenannten Spiegelbox kann das mindestens eine Element zur geometrischen Lagebestimmung alternativ aus mindestens einem an oder in der Wandung der Spiegelbox angeordnetem lichtaussendenden Element bestehen, das im aktiven Zustand durch Reflexion bzw. Transmission im halbdurchlässigen Spiegel Licht in die mindestens zwei Kameras entsendet und im nicht aktiven Zustand das aufzunehmende Bild nicht stört oder nicht wahrnehmbar ist. An diesem lichtaussendenden Element kann ein Linsensystem angeschlossen sein, um den Lichtpunkt oder das Muster auch bei Unterschreiten der minimal fokussierbaren Nahdistanz noch scharf abbilden zu können. Das lichtaussendende Element kann auch ein Loch mit einer Klappe sein, die das Licht von außen in die Spiegelbox kommen lässt.

Ebenfalls ist ein mechanisches Einbringen (z.B. Einklappen oder Einstecken eines passiven oder aktiven (z.B. leuchtenden) Merkmales zur geometrischen Lagebestimmung möglich.

Die Vorrichtung kann auch einen an der dreidimensionalen Aufnahmeeinheit anbringbaren Kasten aufweisen, in dem sowohl die Kalibrierungselemente zur Fern-Kalibrierung als auch die Kalibrierungselemente zur Nah-Kalibrierung angeordnet sind und damit eine Kalibrierung unabhängig von den Licht- oder sonstigen Umwelt-Verhältnissen der Umgebung ermöglicht.

Alle Kalibrierungselemente können zur besseren Erkennung aktive, schaltbare Leuchtelemente oder fluoreszierende Flächen aufweisen. Die verwendeten aktiven Leuchtelemente können optional Licht in bestimmten Wellenlängen, Impulsen oder Frequenzen aussenden, so dass diese z.B. den Nutzer nicht stören oder leichter von automatischen Erkennungsalgorithmen erkannt werden können.

Zur besseren Lagebestimmung oder zur genaueren Kalibrierung durch Softwarealgorithmen, kann die Lage der Kalibrierungselemente entweder durch eine Messvorrichtung vom dreidimensionalen Aufnahmegerät aus oder durch Rückmeldung der Kalibrierungstafeln oder -Vorrichtungen an eine zentrale Rechnerschnittstelle erfolgen. Dazu können diese eine Sendeeinrichtung besitzen bzw. durch eine passive Vorrichtung oder Encodierung (z.B. durch bestimmte / definierte Abstände von passiven oder aktiven (selbstleuchtenden) Punkten innerhalb dieser Kalibrierungstafeln oder -Vorrichtungen) Rückschlüsse auf deren Entfernung zulassen.

### Figurenbeschreibung:

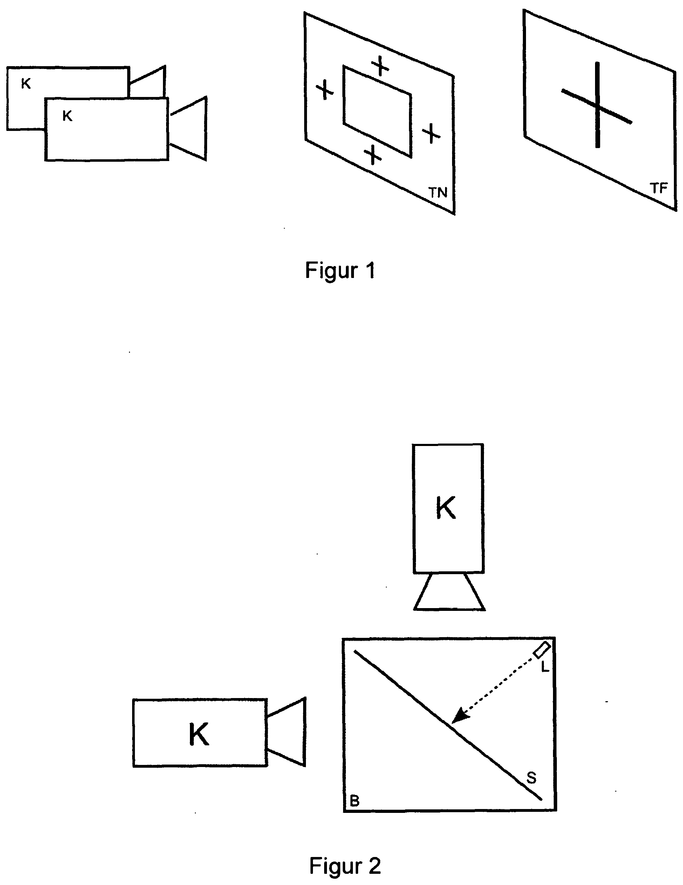

**Figur 1** zeigt zum grundsätzlichen Verständnis zwei Kameras K und eine Kalibrierungstafel TN für die Nah-Kalibrierung und eine Kalibrierungstafel TF für die Fern-Kalibrierung.
**Figur 2** zeigt beispielhaft zwei Kameras K, die auf einer Aufnahmevorrichtung für dreidimensionale Aufnahme montiert sind. Diese Aufnahmevorrichtung besteht unter anderem aus einer Spiegelbox B und einem halbdurchlässigen Spiegel S. Zur Kalibrierung wird mit Hilfe eines lichtaussenden Elementes oder Lasers L beispielsweise ein Muster auf den halbdurchlässigen Spiegel S in der Spiegelbox B projiziert.

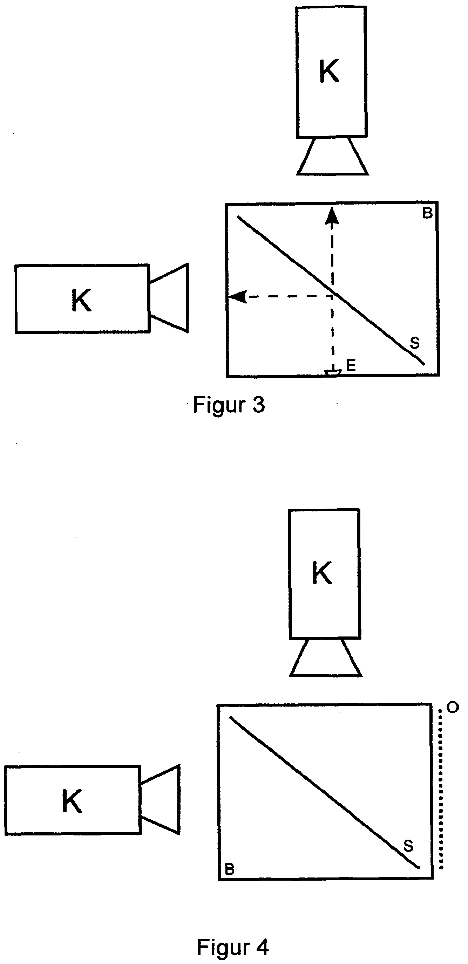

**Figur 3** zeigt beispielhaft zwei Kameras K, die auf einer Aufnahmevorrichtung für dreidimensionale Aufnahme montiert sind. Diese Aufnahmevorrichtung besteht unter anderem aus einer Spiegelbox B und einem halbdurchlässigen Spiegel S. Zur Kalibrierung wird mit Hilfe eines lichtaussenden Elementes E an oder in der Wandung oder dem Boden der Spiegelbox B mindestens ein Referenzpunkt oder Muster auf und durch den halbdurchlässigen Spiegel S in beide Kameras projiziert.
**Figur 4** zeigt beispielhaft zwei Kameras K, die auf einer Aufnahmevorrichtung für dreidimensionale Aufnahme montiert sind. Diese Aufnahmevorrichtung besteht unter anderem aus einer Spiegelbox B und einem halbdurchlässigen Spiegel S. Zur Kalibrierung werden Kalibrierungsmerkmale auf einem zeitweise transparent geschalteten optischen Element O angezeigt.

## Patentansprüche

1. Vorrichtung zum Kalibrieren einer Mehrkamera-Aufnahmevorrichtung für dreidimensionale Bildaufnahme,
wobei die Aufnahmevorrichtung aus zwei jeweils zueinander im Wesentlichen senkrecht angeordneten Kameras und einer Spiegelbox besteht, die die einfallenden Objektstrahlen mit Hilfe eines halbdurchlässigen Spiegels auf die zwei Kameraebenen aufteilt
wobei die Kalibrierung der geometrischen Lage der Kameras zueinander in zwei Tiefenebenen erfolgt,
und wobei zur Fem-Kalibrierung mindestens ein natürliches oder künstliches Kalibrierungselement in der entfernten Tiefenebene vorhanden oder angeordnet ist, **dadurch gekennzeichnet, dass**
zur Nah-Kalibrierung mindestens ein Element zur geometrischen Lagebestimmung der Kameras zueinander direkt an oder in der dreidimensionalen Aufnahmevorrichtung angebracht ist.

2. Vorrichtung nach Anspruch 1, **dadurch gekennzeichnet, dass** dass das mindestens eine Element zur geometrischen Lagebestimmung das vorübergehende Einblenden oder Projizieren von einem oder mehreren Laserpunkt(en), Linie(n), Figur(en), Muster(n) oder anderweitigen Projektionsmuster(n) in die Spiegelbox erzeugt.

3. Vorrichtung nach Anspruch 1, **dadurch gekennzeichnet, dass** dass das mindestens eine Element zur geometrischen Lagebestimmung aus mindestens einem an oder in der Wandung der Spiegelbox angebrachten lichtaussendenden Element besteht, das im aktiven Zustand durch Reflexion am bzw. Transmission durch den halbdurchlässigen Spiegel Licht in die zwei Kameras entsendet und das aufzunehmende Bild nicht stört oder im nicht aktiven Zustand darin nicht wahrnehmbar ist.

4. Vorrichtung nach Anspruch 3, **dadurch gekennzeichnet, dass** sich an dem lichtaussendenden Element ein Linsensystem befindet.

5. Vorrichtung nach Anspruch 1, **dadurch gekennzeichnet, dass** als das mindestens eine Element zur geometrischen Lagebestimmung ein zeitweise transparent geschaltetes optisches Element im Strahlengang vorhanden ist, das in der Lage ist, ein Merkmal zur geometrischen Lagebestimmung zeitweise einzublenden.

6. Vorrichtung nach Anspruch 1, **dadurch gekennzeichnet, dass** als das mindestens eine Element zur geometrischen Lagebestimmung ein mechanisches Element ist, das in den Strahlengang manuell oder motorisch eingebracht oder eingeklappt werden kann.

7. Vorrichtung nach einem der Ansprüche 1 bis 6, **dadurch gekennzeichnet, dass** das mindestens eine künstliche Kalibrierungselement für die Ferne mittels Magnet oder Kletthaftung oder Klebung oder Stecken an vorhandenen Gegenständen im Aufnahmeraum anbringbar und wieder ablösbar ist.

8. Vorrichtung nach einem der Ansprüche 1 bis 7, **dadurch gekennzeichnet, dass** die Kalibrierungselemente in mindestens einer der beiden Tiefenebenen mindestens ein aktives, schaltbares Leuchtelement aufweisen.

9. Vorrichtung nach Anspruch 8, **dadurch gekennzeichnet, dass** die verwendeten aktiven Leuchtelemente Licht in bestimmten Wellenlängen oder Impulsen aussenden können.

10. Vorrichtung nach einem der Ansprüche 1 bis 9, **dadurch gekennzeichnet, dass** die Kalibrierungselemente in mindestens einer der beiden Tiefenebenen mindestens eine fluoreszierende Fläche aufweisen.

11. Vorrichtung nach einem der Ansprüche 1 bis 10, **dadurch gekennzeichnet, dass** die Lagebestimmung der Kalibrierungselemente entweder durch eine Messvorrichtung vom dreidimensionalen Aufnahmegerät aus an eine zentrale Rechnerschnittstelle erfolgen kann oder durch Rückmeldung der Kalibrierungselemente der beiden Tiefenebenen an eine zentrale Rechnerschnittstelle erfolgen kann.

12. Vorrichtung nach Anspruch 11, **dadurch gekennzeichnet, dass** durch eine Sende- und Empfangseinrichtung oder durch eine passive Vorrichtung Rückschlüsse auf die Entfernung der Kalibrierungselemente ermöglicht werden.

## Claims

1. Device for the calibration of a multi-camera recording device for three dimensional picture recording,
where the recording device consists of two essentially vertically aligned cameras and a mirror box which divides the incoming object beams with the aid of a partial mirror up on the two camera levels,
where the calibration of the geometric position of the cameras to each other occurs in two depth levels,
and where for distance calibration at least one natural or artificial calibration element is available in the distant depth-level,
**characterized by**
at least one element for geometric positioning of the cameras to each other being available directly on or in the three-dimensional recording device for near calibration.

2. Device according to claim 1, **characterized by**
the at least one element for geometric positioning creating the temporary fade-in or projection of one or more laser point(s), line(s), shape(s), pattern(s) or other projection pattern(s) in the mirror box.

3. Device according to claim 1, **characterized by**
the at least one element for geometric positioning consisting of at least one on or in the wall of the mirror box positioned light emitting element which in active mode sends light via reflection or transmission through the partial mirror in the two cameras and does not disturb the picture to be recorded or is not recognizable in inactive mode

4. Device according to claim 3, **characterized by**
a lens system being attached to the light emitting element.

5. Device according to claim 1, **characterized by**
the at least one element for geometric positioning being a temporarily transparent optical element which is in the beam path and is capable of temporarily fading-in a feature for geometric positioning.

6. Device according to claim 1, **characterized by**
the at least one element for geometric positioning being a mechanical element which can be manually or motor-driven inserted or retracted in the beam path.

7. Device according to one of the claims 1 to 6, **characterized by**
the at least one additional calibration element for the distance being attachable and removable with a magnet or Velcro or glue or plugging, to an existing object in the recording room.

8. Device according to one of the claims 1 to 7, **characterized by** the calibration elements in at least one of the two depth levels having at least one active, switchable diode

9. Device according to claim 8, **characterized by**
the used active diodes being able so send light in specific wave lengths or impulses.

10. Device according to one of the claims 1 to 9, **characterized by**
the calibration elements in at least one of the two depth levels having at least one fluorescent area.

11. Device according to one of the claims 1 to 10, **characterized by**
the positioning of the calibration elements being either determined with a measuring device from the three-dimensional recording device to a central computer interface or via a return signal of the calibration elements of the two depth levels to a central computer interface.

12. Device according to claim 11, **characterized by**
the possibility to draw conclusions on the distance of the calibration elements via a transmission and reception device or via a passive device.

## Revendications

1. Dispositif de réglage d'un appareil d'enregistrement multi-caméra pour une capture d'image en trois dimensions,
lequel appareil est constitué de deux caméras disposées de façon quasiment perpendiculaire l'une par rapport à l'autre ainsi que d'une boîte à miroir qui divise les faisceaux-objets entrants sur les deux plans de l'appareil à l'aide d'un miroir semi-transparent,
dont le réglage de la position géométrique des caméras l'une par rapport à l'autre se fait sur deux plans de profondeur,
et dans le cadre duquel il existe au moins un élément naturel ou artificiel dans le plan de profondeur plus éloigné pour le réglage à distance,
**caractérisé en ce que**,
en vue du réglage rapproché, au moins un élément de détection de position géométrique des caméras l'une par rapport à l'autre est directement disposé sur ou dans l'appareil d'enregistrement en trois dimensions.

2. Dispositif suivant la revendication 1, **caractérisé en ce que** l'élément (au moins un seul) de détection de position géométrique génère, dans la boîte à miroir, la projection ou l'ouverture en fondu momentanée d'un ou plusieurs point(s) laser(s), ligne(s), figure(s), modèle(s) ou de tous autres modèles de projection.

3. Dispositif suivant la revendication 1, **caractérisé en ce que** l'élément (au moins un seul) de détection de position géométrique est composé d'au moins un élément d'émission de lumière monté sur ou dans la paroi de la boîte à miroir, qui à l'état actif envoie la lumière dans les deux caméras par réflexion sur ou transmission par le miroir semi-transparent, et qui n'interfère pas avec la photo prise ou qui est invisible à l'état non-actif.

4. Dispositif suivant la revendication 3, **caractérisé en ce que** un système de lentille se situe sur l'élément d'émission de lumière.

5. Dispositif suivant la revendication 1, **caractérisé en ce que**,
l'élément (au moins un seul) de détection de position géométrique est présent dans la trajectoire du faisceau en tant qu'élément optique temporairement transparent, qui est capable de faire apparaître temporairement une caractéristique de détection de position géométrique.

6. Dispositif suivant la revendication 1, **caractérisé en ce que** l'élément (au moins un seul) de détection de position géométrique est un élément mécanique qui peut être inséré ou plié manuellement ou via un moteur dans la trajectoire du faisceau.

7. Dispositif suivant l'une des revendications 1 à 6, **caractérisé en ce que** l'élément (au moins un seul) artificiel de réglage de la vision de loin peut être monté dans le réceptacle et détaché au moyen d'aimants, de velcros, de collage ou d'insertion sur des objets existants.

8. Dispositif suivant l'une des revendications 1 à 7, **caractérisé en ce que** les éléments de réglage comportent au moins un corps d'éclairage actif et commutable dans au moins un des deux plans de profondeur.

9. Dispositif suivant la revendication 8, **caractérisé en ce que** les corps d'éclairage actifs utilisés peuvent émettre de la lumière dans certaines longueurs d'onde ou impulsions.

10. Dispositif suivant l'une des revendications 1 à 9, **caractérisé en ce que** les éléments de réglage comportent au moins une surface fluorescente dans au moins un des deux plans de profondeur.

11. Dispositif suivant l'une des revendications 1 à 10, **caractérisé en ce que** la détermination de la position géométrique des éléments de réglage peut être effectuée soit par un dispositif de mesure de l'appareil d'enregistrement en trois dimensions sur une interface d'ordinateur centrale, soit par la réaction des éléments de réglage des deux plans de profondeur sur une interface d'ordinateur centrale.

12. Dispositif suivant la revendication 11, **caractérisé en ce que** des déductions quant à la distance des éléments de réglage sont rendues possibles par un dispositif d'émission et de réception ou par un dispositif passif.
